# EUROPÄISCHE PATENTANMELDUNG

(11) **EP 0 908 157 A2**
(43) Veröffentlichungstag der Anmeldung: **14.04.1999**
(21) Anmeldenummer: 98116385.0
(22) Anmeldetag: 29.08.1998
(51) Int. Cl.: A61C 8/00

(54) **Kieferimplantat zur Halterung eines Zahnersatzes am menschlichen Kiefer**

(30) Priorität: 19.09.1997 DE 29716883 U
(71) Anmelder: Lauks, Nikola, Dr., D-22397 Hamburg (DE)
(72) Erfinder: Lauks, Nikola, Dr., D-22397 Hamburg (DE)
(74) Vertreter: Gosch, Wolf-Dietrich

(57) **Zusammenfassung**

Kieferimplantat für eine Suprastruktur für zahnmedizinische Zwecke zur Halterung eines Zahnersatzes am menschlichen Kiefer, wobei das Implantat 1 aus einem im Implantatkorpus 1a besteht, der an seiner der Suprastruktur 2 abgewandten Spitze 1b mindestens einen Keil 3 aufweist, der den Implantatkorpus 1a in seiner Langsrichtung in Richtung auf den Kieferknochen 12,13 überragt. Das Implantat kann auch zwei Keile 3 einander gegenüberliegend oder drei Keile 3 kreisförmig um die Längsachse des Implantates 1 angeordnet aufweisen.

## Beschreibung

Die Erfindung betrifft ein Kieferimplantat für eine Suprastruktur für zahnmedizinische Zwecke zur Halterung eines Zahnersatzes am menschlichen Kiefer,

Derartige Kieferimplantate sind üblicherweise im wesentlichen zylindrisch, konisch schraubenförmig oder in Form eines Blattimplantates ausgebildet und ragen in eine im Knochen geschaffene Bohrkavität. An diesen Implantaten wird üblicherweise eine Suprastruktur mit Hilfe einer Schraubverbindung befestigt.

Um in den Kieferknochen einzuwachsen und um so schnell wie möglich die Supraskruktur befestigen zu können, müssen die Implantate eine primäre Stabilität aufweisen, d. h, sie müssen unmittelbar nach dem Einbringen fest in der Bohrkavität sitzen. Dies wurde nach dem Stand der Technik auf verschiedene Weisen erreicht. Ein Implantat, dessen Stärke den Bohrungsdurchmesser knapp übersteigt, erreicht eine Presspassung, die Pressfit genannt wird. Ist aufgrund der Knochenstruktur oder einer mangelhaften Bohrung diese Presspassung zu gering, kann es zum Verlust des Implantates kommen. Ist die Presspassung zu stark, kommt es aufgrund des Druckes zu einer Ishämnie des das Implantat umgebenden Knochengewebes. Dies führt zum partiellen Absterben des Knochens und gefährdet wiederum die Einheilung des Implantates.

Bei Schraubenimplantaten ist die Gewalteinwirkung beim Einschrauben in den Kieferknochen so groß, daß es regelmäßig zur Resorption des periimplantären Knochens kommt, die durch Knochenneubildung ausgeglichen werden muß. Dies führt neben einer Gefährdung der Einheilung des Implantates mindestens zu einer Verlängerung der Einzelheit. Weiter besteht bei einem mangelhaften Knochenangebot die Gefahr, daß zu tief gebohrt wird. Es kann die Kieferhöhle eröffnet und der nervus mandibularis verletzt werden. Letztlich muß für jedes Implantat entsprechend seiner Länge Knochengewebe entfernt werden, wobei das verbleibende umliegende Knochengewebe traumatisiert wird.

Aufgabe der vorliegenden Erfindung ist es daher, ein Kieferimplantat für eine Suprastruktur der eingangs genannten Art zu schaffen, dessen Einheilung mit größter Sicherheit erreicht wird und bei dem die Traumatisierung des Knochens herabgesetzt wird.

Diese Aufgabe wird erfindungsgemäß dadurch gelöst, daß das Implantat aus einem Implantatkorpus besteht, der an seiner der der Suprastruktur abgewandten Seite mindestens einen Keil aufweist, der den Implantatkorpus in seiner Längsrichtung in Richtung auf den Kieferknochen über ragt.

Aufgrund der besonderen Ausgestaltungsform des Implantates, kann der Keil beim Einbringen des Implantates in den Markraum des nicht durch eine Bohrung belasteten und geschädigten Knochens eindringen und dort Halt finden. Auf diese Weise wird die Primärstabilität des Implantates unabhängig von der Form und Tiefe der Bohrung sofort hergestellt.

Weitere Einzelheiten der Erfindung ergeben sich aus der nachfolgenden genauen Beschreibung und den beigefügten Zeichnungen, in denen mehrere Ausführungsformen der Erfindung beispielsweise veranschaulicht sind.

In den Zeichnungen zeigen.

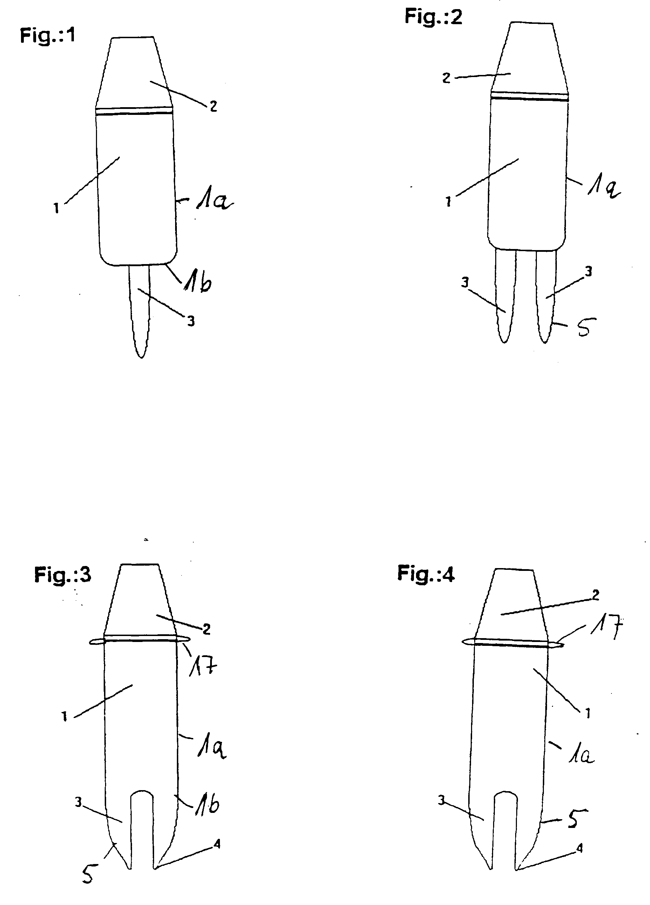

- **Figur 1:**: Eine Seitenansicht eines Kieferimplantates mit Suprastruktur und zentralen, Keil kreisförmigen Querschnitts.
- **Figur 2:**: Eine Seitenansicht eines Kieferimplantates mit Suprastruktur und zwei Keilen kreisförmigen Querschnitts.
- **Figur 3:**: Eine Seitenansicht eines Kieferimplantates mit Suprastruktur und zwei Keilen mehrkantigen Querschnitts
- **Figur 4:**: Eine Seitenansicht eines Kieferimplantates mit Suprastruktur und vier Keilen mehrkantigen Querschnitts.

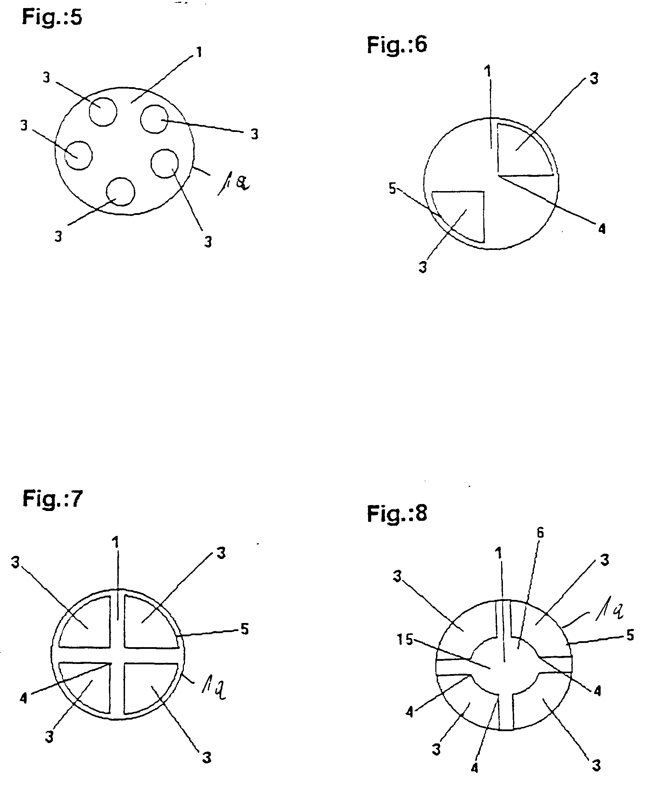

- **Figur 5:**: Die Aufsicht auf die Unterseite eines Implantates mit fünf im Kreis angeordneten entlang der Längsachse verlaufenden Keilen runden Querschnitts.
- **Figur 6:**: Die Aufsicht auf die Unterseite eines Implantates mit zwei mehrkantigen Keilen deren eine Seitenfläche abgerundet ist
- **Figur 7:**: Die Aufsicht auf die Unterseite eines Implantates mit vier im Kreis angeordneten mehrkantigen Keilen deren eine Seitenfläche abgerundet ist.
- **Figur 8:**: Die Aufsicht auf die Unterseite eines Implantates mit vier im Kreis angeordneten mehrkantigen Keilen deren eine Seitenfläche abgerundet ist, mit einer zentralen Bohrung.

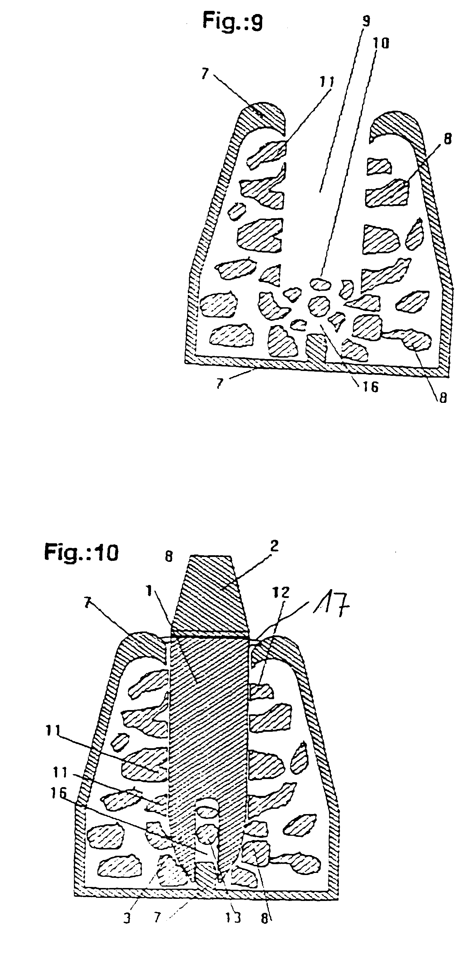

- **Figur 9:**: Einen Querschnitt durch einen Kieferknochen mit eingebrachter Implantatbohrung.
- **Figur 10:**: Einen Querschnitt durch einen Kieferknochen mit eingebrachter Implantatbohrung und eingebrachtem Implantat, das vier Keile aufweist.

Ein Kieferimplantat (1) besteht aus einem Implantatkorpus (1a), der im wesentlichen zylindrisch oder leicht konisch gestaltet ist, eine in den Kieferknochen (12, 13) hineinragendes Ende (1b) aufweist und an seinem dieser abgewandten Ende eine Haltevorrichtung (Suprastruktur 2) für den aufzubringenden Zahnersatz.

An der der Suprastruktur (2) abgewandten Ende (1b) befindet sich mindestens ein, vorzugsweise aber mehrere Keile (3). Sie können runde, drei- oder mehreckige Querschnitte aufweisen.

Aufgrund einer besonders bevorzugten Ausgestaltungsform, in der ein Keil (3) mindestens eine Schneidkante (4) aufweist, wird das Einbringen des Implantates (1) dadurch erleichtert, daß die Schneidkante (4) dafür sorgt, daß eventuell störende Spongiosateilchen (7,13) durchtrennt werden können.

Als vorteilhaft erweist es sich, wenn jeder Keil (3) mindestens eine nach außen abgerundete Fläche (5) aufweist Auf diese Weise erhält das Implantat (1) beim Einbringen die entsprechenden Führungsflächen, mit den abgerundeten Flächen (5) stützt sich das Implantat beim Einbringen in die Bohrkavität (9) an den Außenwänden der Bohrkavität (9) gleitend ab.

Die Tiefe der Bohrung (9) kann dadurch geringer als die Gesamtlänge des Implantates (1) gehalten werden. Dementsprechend wird die Gefahr verringert, die Kieferhöhle durch die Bohrung (9) zu trepanieren oder den nervus mandibularis zu verletzen

Eine übermäßige Presspassung wird unnötig, so daß die Durchblutung des den Implantatkorpus (1a) umgebenden Knochengewebes (12, 13) nicht gestört ist. Auch das die Bohrwandung (9) bildende Knochengewebe (12,13) ist weniger traumatisiert, weil weniger Zeit zur Herstellung der Bohrkavitat benötigt wird. Aufgrund einer besonderen Ausgestaltungsform der Erfindung, sind zwei oder mehr Keile (3) in Querrichtung des Implantates (1) einander gegenüberliegend oder mindestens drei Keile (3)kreisförmig um die Längsachse des Implantates 5 (1) angeordnet. Dadurch wird eine Rotation des Implantates (1) um seine Längsachse verhindert. Beim Einsetzen des Implantates (1) können zwei oder mehrere Keile (3) in den Markraum (16) des Knochens (12,12) eindringen. Die Spongiosa wird in einen zwischen den Keilen (3) entstandenen Innenraum (15) des Implantates (1) gedrängt und bleibt dabei vital und bildet von Anfang an einen Antirotationsblock für das Implantat (1). Beim Eröffnen des Implantates (1) werden später nach dessen Einheilung wie üblich Abdruckpfosten oder die Suprastruktur (2) eingeschraubt. Dies gefährdet bei herkömmlichen Implantaten das frisch eingeheilte Implantat. Durch den Antirotationsblock wird ein Überdrehen des Implantates (1) aber unmöglich. So wird der Verlust des Implantates (1) sicher vermieden.

Das Implantat (1) ist an seinem der Suprastruktur (2) zugekehrten Ende mit einem den Implantatkorpus (1a) radial umgebenden Ringflansch (17) versehen, der beim Eindringen des Implantates (1) in die Bohrkavität (9) diese abdichtet und so zuverlässig das Eindringen von Keimen verhindert, wie dies in der EP 0 370 522 B1 beschrieben ist.

## Patentansprüche

1. Kieferimplantat für eine Suprastruktur für zahnmedizinische Zwecke zur Halterung eines Zahnersatzes am menschlichen Kiefer, dadurch gekennzeichnet, daß das Implantat (1) aus einem Implantatkorpus (1a) besteht, der an seiner der Suprastruktur (2) abgewandten Spitze (1b) mindestens einen Keil (3) aufweist, der den Implantatkorpus (1a) in seiner Längsrichtung in Richtung auf den Kieferknochen (12,13) überragt.

2. Kieferimplantat nach Anspruch 1, dadurch gekennzeichnet, daß mindestens zwei Keile (3) einander gegenüberliegend angeordnet sind.

3. Kieferimplantat nach Anspruch 1, und 2, dadurch gekennzeichnet, daß mindestens drei Keile (3) kreisförmig uni die Längsachse des Implantates (1) angeordnet sind.

4. Kieferimplantat nach Anspruch 1, bis 3, dadurch gekennzeichnet, daß mindestens ein Keil (3) mindestens eine auf den Kieferknochen (12,13) gerichtete Schneidkante (4) aufweist.

5. Kieferimplantat nach Anspruch 1, bis 3, dadurch gekennzeichnet, daß der Keilquerschnitt kreisförmig ist.

6. Kieferimplantat nach Anspruch 1, bis 4, dadurch gekennzeichnet, daß der Keilquerschnitt mehrkantig ist.

7. Kieferimplantat nach Anspruch 1, bis 4, und 6, dadurch gekennzeichnet, daß der Keilquerschnitt dreieckig ist.

8. Kieferimplantat nach Anspruch 1, bis 7, dadurch gekennzeichnet, daß der Keil (3) mindestens eine nach außen abgerundete Fläche aufweist.

9. Kieferimplantat nach Anspruch 1, bis 8, dadurch gekennzeichnet, daß die der Suprastruktur (2) abgewandte Seite des Kieferimplantates mindestens eine Bohrung entlang der Längsachse des Implantates (1) aufweist, die einen Innenraum (15) ausbildet.

10. Kieferimplantat nach Anspruch 1, bis 9, dadurch gekennzeichnet, daß das Implantat (1) einen im wesentlichen runden Querschnitt aufweist.

11. Kieferimplantat nach Anspruch 1, bis 10, dadurch gekennzeichnet, daß es im wesentlichen zylindrisch oder patronenförmig ausgebildet ist.

12. Kieferimplantat nach Anspruch 1 bis 10, dadurch gekennzeichnet, daß es im wesentlichen konisch ausgebildet ist und sich in seiner der Suprastruktur (2) abgewandten Richtung verjüngt.

13. Kieferimplantat nach Anspruch 1 - 11, dadurch gekennzeichnet, daß es an seinem der Suprastruktur (2) zugekehrten Ende mit einem den Implantatkorpus (1a) radial umgebenden Ringflansch (17) versehen ist.
